# EUROPÄISCHE PATENTSCHRIFT

(11) **EP 1 513 389 B1**
(45) Veröffentlichungstag und Bekanntmachung des Hinweises auf die Patenterteilung: **16.04.2008**
(21) Anmeldenummer: 03727483.4
(22) Anmeldetag: 16.05.2003
(51) Int. Cl.: A01B 69/00, G05D 1/02

(54) **KOMBINATION AUS EINER SELBSTFAHRENDEN ERNTEMASCHINE UND EINEM TRANSPORTFAHRZEUG**
COMBINATION OF A SELF-MOVING HARVESTING MACHINE AND A TRANSPORT VEHICLE
COMBINAISON D'UNE MOISSONNEUSE AUTOMOBILE ET D'UN VEHICULE DE TRANSPORT

(30) Priorität: 31.05.2002 DE 10224939
(43) Veröffentlichungstag der Anmeldung: 16.03.2005
(73) Patentinhaber: DEERE & COMPANY, Moline, Illinois 61265-8098 (US)
(72) Erfinder: WEISS, Heinz, 64625 Bensheim (DE)
(74) Vertreter: Holst, Sönke
(86) Internationale Anmeldenummer: PCT/EP2003/005144
(87) Internationale Veröffentlichungsnummer: WO 2003/101178

(56) Entgegenhaltungen:
- WO-A-00/35265
- DE-A- 10 064 862
- DE-A- 19 705 842
- FR-A- 2 712 769
- JP-A- 4 101 206
- US-A- 4 376 609
- US-A- 5 546 093
- US-A- 6 148 255
- US-B1- 6 205 381

## Beschreibung

Die Erfindung betrifft eine Kombination aus einer selbstfahrenden Erntemaschine und einem zur Aufnahme von Erntegut von der Erntemaschine eingerichteten Transportfahrzeug, das mindestens eine angetriebene und mindestens eine gelenkte Achse aufweist, wobei das Transportfahrzeug eine elektronische Steuerungseinheit aufweist, die zur Steuerung der angetriebenen und der gelenkten Achse des Transportfahrzeugs eingerichtet ist, und die Steuerungseinheit mit einer Empfangseinheit verbunden ist, die eingerichtet ist, Positionsdaten der Erntemaschine zu empfangen, so dass die Steuerungseinheit betreibbar ist, das Transportfahrzeug zur Übernahme von Erntegut von der Erntemaschine selbsttätig in Bezug zu einer Position der Erntemaschine zu steuern.

Mitte der 50er Jahre des vorigen Jahrhunderts wurden einachsige Wagen in der Landwirtschaft durch Triebachs-Anhänger ersetzt, da die Traktoren bei niedriger aber hinreichender Leistung keine ausreichende Masse besaßen, um bei widrigen Witterungsbedingungen die mehr als doppelt so schweren Anhänger zu ziehen. Der Triebachs-Anhänger wurde mit einer mechanischen Deichsel an den Traktor gekoppelt und über die Zapfwelle des Traktors angetrieben. Das Traktionsgewicht der Transporteinheit konnte hierdurch um die Masse des Triebachs-Anhängers plus Beladung erhöht und so auf die Räder verteilt werden, dass jedes Rad die Last, die es trug, auch antrieb und bremste. Da geeignete Regelelektronik noch fehlte, um die Drehzahlen der Räder von Traktor und Triebachs-Anhänger an die unterschiedlichen Kurvenhalbmesser anzupassen, geschah es, dass der Triebachs-Anhänger den Traktor unter gewissen Bedingungen umstürzte, was zu tödlichen Unfällen führte. Herstellung und Vertrieb von Triebachs-Anhängern wurden deshalb eingestellt.

Heutige Elektronik gestattet es aber, oben beschriebene Funktionalität sicher darzustellen.

Im VDI-Bericht 1356 "Landtechnik 1997" hat Tapazdi Ergebnisse seiner Dissertation "Möglichkeiten der Verbesserung des Rad-Boden Kontaktes" wie folgt zusammengefasst:

| | | % | Schlupf | % |
|---|---|---|---|---|
| Lfd. | Fahrzeugantrieb | Boden normal | Boden nass | schwer / nass |
| 1 | Hinterradantrieb | 22 | 40 | 60 |
| 2 | 1+Vorderrad | 20 | 28 | 55 |
| 3 | 2+ Triebachser | 18 | 20 | 40 |
| 4 | 3+ Reifendruck | 14 | 16 | 35 |

Die Schlupfwerte beziehen sich auf die Hinterräder des Traktors, wobei ein Schlupf von 20 % in der Landwirtschaft für normale Böden einen guten Wert darstellt. Aus der Tabelle kann abgelesen werden, dass sich dieser Wert nach Zuschaltung der Vorderrad-Triebachse einstellt. Eine Zuschaltung des Triebachs-Anhängers bringt unter den geschilderten Bedingungen keine wesentlichen Vorteile mehr.

Auf nassem Boden kann ein Schlupf von 20 % aber nur nach Zuschaltung des Antriebs des Triebachs-Anhängers gehalten werden. Auf nassen schweren Böden reicht aber auch diese Maßnahme nicht aus, um eine befriedigende Mobilität und Traktion zu sichern. Mit der Aktivierung der Reifendruckregelanlage an allen Rädern kann aber erreicht werden, dass die Transportfahrzeuge nicht steckenbleiben.

Betrachtet man die Größe und das Gewicht der auf der Messe Agritechnica Hannover 2001 ausgestellten Transport-Anhänger und selbstfahrenden Erntemaschinen und die gestiegenen Durchsätze der Maschinen durch größere Arbeitsbreiten und höhere Geschwindigkeiten, so muss die Forderung erhoben werden, durch Leichtbau und verbesserte Maschinenkonzepte die Belastung der Böden zu senken. Hinsichtlich der Maschinenkonzepte können. folgende Überschlagsrechnungen angestellt werden. Wenn man von einem Durchsatz eines Feldhäckslers von 150 t/h ausgeht, so werden 8,3 Transportfahrzeuge der Einheit "Traktor plus 20 t Tandem-Anhänger (nicht angetrieben)" benötigt, ohne auf die Einflüsse der Transportentfernungen einzugehen.

Setzt man einen Tandem-Triebachs-Anhänger ein, der in der Lage ist, einen Dreiachs-Deichsel-Anhänger von 30 Tonnen zusätzlich zu ziehen, so kann das Transportaufkommen von 3,3 Transporteinheiten bewältigt werden. Das bedeutet eine Einsparung von 5 Traktoren, wobei die Kosten für die Einzelradantriebe der Triebachs-Anhänger gegenzurechnen sind.

Wenn man in Kenntnis der Versuche mit "Fahrerassistenz-Systemen" das Problem ganz konsequent angeht und auf Tridem-Triebachs-Anhänger umstellt, so können 8,3 Traktoren eingespart werden, wobei das Häckselgut von 2,8 Gespannen mit jeweils zwei Tridem-Triebachs-Anhängern bewältigt wird.

Im Juni 1999 wurden von Daimler-Chrysler auf der Autobahn A 81 Prototypen zweier Nutzfahrzeuge mit "elektronischer Deichsel" vorgestellt. Die beiden Fahrzeuge waren elektronisch so miteinander gekoppelt, dass das vorausfahrende Fahrzeug wie gewohnt von einem Fahrer gelenkt, beschleunigt und verzögert wurde, während das nachfolgende Fahrzeug ohne Fahrer gleichsam mit einer "virtuellen Deichsel" dem Leitfahrzeug in geringem Abstand und mit angepasster Geschwindigkeit folgte.

Fahrerassistenz-Systeme dieser Art unterscheiden sich von Servo-Systemen dadurch, dass sie mit zusätzlicher Elektronik bestückt sind und Intelligenz besitzen, um dem Fahrer in kritischen Situationen die Fahrentscheidung und die Lenkarbeit abzunehmen.

Das kann am Beispiel der ABS-Bremsen erläutert werden. ABS greift ein, wenn der Fahrer das Fahrzeug überbremst, so dass die Räder zum Blockieren neigen. Mit ABS kann das Blockieren der Räder aber ohne Zutun des Fahrers vermieden werden, so dass das Fahrzeug seine Straßenführung nicht verliert und sicher gebremst werden kann. Zukünftige Fahrzeuge sind ohne Fahrerassistenz dieser Art und ohne Mechatronik nicht mehr denkbar.

Die DE 197 05 842 A beschreibt ein Ernteverfahren, bei dem von einer Leitstelle aus Erntemaschinen ferngesteuert werden. Die Erntemaschine kann aber auch durch ein Navigationssystem, z. B. GPS, auf ihrer Bahn geführt werden, oder durch Systeme zur Reihenerkennung von Erntegutbeständen, wobei sie von der Leitstelle aus überwacht wird. Falls der Korntank eines Mähdreschers gefüllt ist, wird von der Leitstelle aus ein Erntegutwagen zur Entleerung des Korntanks zum Mähdrescher geschickt. Der Erntegutwagen kann ferngesteuert oder durch Bedienpersonen gesteuert werden. Eine selbsttätige oder automatische Lenkung des Erntegutwagens ist dieser Druckschrift nicht entnehmbar. Als nachteilig ist somit anzusehen, dass für die Fernsteuerung oder Bedienung des Erntegutwagens eine Bedienperson vorzusehen ist.

Die WO 00/35265 A beschreibt ein elektronisch unterstütztes Betriebsverfahren für einen Mähdrescher und ein Transportfahrzeug. Der Mähdrescher ist mit Mitteln zur Erfassung des Füllungsgrades seines Korntanks versehen. Anhand des Füllungsgrades des Korntanks, einer Karte des Feldes und einer mit einer Satellitenempfangseinheit versehenen Positionsbestimmungseinrichtung wird bestimmt, wann und an welchem Ort eine Überladung des Korns auf das Transportfahrzeug erfolgen soll. Das ebenfalls mit einer Positionsbestimmungseinrichtung ausgestattete Transportfahrzeug wird dann angewiesen, sich durch einen entsprechend informierten Fahrer oder selbsttätig zu der erwarteten Zeit an den erwarteten Ort zu begeben, an dem der Überladevorgang stattfinden soll. Das Gut wird überladen und anschließend fährt das Transportfahrzeug selbsttätig oder manuell gelenkt zu einer Überladestelle, an der das Korn auf einen Lastwagen überladen wird. Eine Parallelfahrt des Mähdreschers und des Transportfahrzeugs während des Abtankens wird nicht offenbart. Bei dem Transportfahrzeug handelt es sich um einen konventionellen Traktor, der mit einer Fahrerkabine und entsprechenden Bedieneinrichtungen ausgestattet ist.

In der US 6 148 255 A wird eine Kombination aus einem landwirtschaftlichen Fahrzeug und einem unbemannten Satellitenfahrzeug beschrieben. Das Satellitenfahrzeug, das beispielsweise ein Transportfahrzeug sein kann, fährt parallel zum Fahrzeug oder hinter ihm her. Die Lenkung des Satellitenfahrzeugs erfolgt über eine Messung der Entfernung und des Winkels zwischen dem Fahrzeug und dem Satellitenfahrzeug oder über GPS-Antennen auf beiden Fahrzeugen.

Die US 5 546 093 A schlägt vor, eine Lademaschine und ein Transportfahrzeug jeweils mit Positionserfassungseinrichtungen in Form von GPS-Antennen zu versehene Das Transportfahrzeug wird selbsttätig zur Aufnahme von Material, das mit der Lademaschine aufgenommen wurde, an die gewünschte Position geleitet.

Die nach dem Prioritätstag des vorliegenden Schutzrechts veröffentlichte DE 100 57 374 A beschreibt eine Kombination aus einem Transportfahrzeug und einer Erntemaschine. Das Transportfahrzeug ist mit einem Bedienerplatz ausgestattet, von dem aus die Erntemaschine fernsteuerbar ist. Die Erntemaschine kann auch selbsttätig an Erntegutreihen entlanggeführt werden. Es besteht die Möglichkeit, dass die Geschwindigkeiten und Lenkungen beider Fahrzeuge synchronisiert werden, um das Überladen des Ernteguts von der Erntemaschine auf das Ernteguttransportfahrzeug zu erleichtern.

In der ebenfalls nach dem Prioritätstag des vorliegenden Schutzrechts veröffentlichten DE 100 64 862 A wird eine ähnliche Vorgehensweise beschrieben. Die Erntemaschine überträgt eine Information über ihre - dur ch ein Satellitenempfangssystem ermittelte - Position auf das Transportfahrzeug, das mit einer Anzeige für den Fahrer versehen ist oder selbsttätig fährt, so dass es in einer gewünschten Position neben der selbstfahrenden Erntemaschine herfährt und das Erntegut übernimmt. Das Transportfahrzeug ist mit einem Bedienerarbeitsplatz versehen.

Aufgabe der vorliegenden Erfindung ist es, ein unbemanntes und autonom fahrendes Transportfahrzeug bereitzustellen, das sich zur Übernahme von Erntegut von einer Erntemaschine während der Fahrt eignet.

Erfindungsgemäß wird diese Aufgabe mit einer Kombination aus einer Erntemaschine und einem Transportfahrzeug, welche die Merkmale des Anspruchs 1 aufweist, gelöst. Vorteilhafte Ausgestaltungsformen und Weiterbildungen der Erfindung können mit den in den nachgeordneten Ansprüchen enthaltenen Merkmalen erreicht werden.

Es wird vorgeschlagen, dass ein unbemanntes Transportfahrzeug mindestens eine angetriebene und mindestens eine gelenkte Achse aufweist, so dass es in Verbindung mit einer Empfangseinheit für Positionsdaten, die mit einer elektronischen Steuerung verbunden ist, durch einen eigenen Antrieb in der Lage ist, sich in Bezug zur jeweiligen Position einer - in der Regel - bemannten Erntemaschine zu bewegen. Das Transportfahrzeug kann parallel zur Erntemaschine fahren und das Erntegut von ihr übernehmen. Es ist in der Lage, sich zum Abtanken parallel z. B. an einen Mähdrescher anzudocken.

Dadurch kann das Transportfahrzeug einer Erntemaschine folgen, ohne dass eine starre mechanische Verbindung vorhanden ist. Es besteht aber auch die Möglichkeit, das Transportfahrzeug in seiner Bewegung so zu steuern, dass es eine ganz bestimmte gezielte Position in Bezug zur Erntemaschine einnehmen kann, um Erntegut von dem entsprechend ausgebildeten Leitfahrzeug übernehmen zu können, ohne dass aufwendige Manövriermanöver erforderlich sind. In gleicher Weise kann ein zweites Transportfahrzeug so gesteuert werden, dass es sich dem ersten Transportfahrzeug anschließt und in der Spur oder auch spurversetzt folgt.

Es kann weiter davon ausgegangen werden, dass die Einsparungsmöglichkeiten bei den Anschaffungskosten für eine Prozesskette mit erfindungsgemäßen Transportfahrzeugen und "virtueller Deichsel" im Vergleich zu bisherigen Transportsystemen groß sind, wenn man bedenkt, dass viele Fahrzeuge nicht mehr benötigt werden und die verbleibenden Komponenten standardisiert werden können. Auch sinken die Anforderungen an die Belastung des Menschen und seine Aufmerksamkeit beim Betrieb einer Prozesskette mit erfindungsgemäßen Transportfahrzeugen im Vergleich zu anderen Transportsystemen wegen der deutlich geringeren Anzahl der Fahrzeuge, dem hohen Automatisierungsgrad der Prozesse und der Unterstützung durch Fahrerassistenz-Systeme. Da das Transportfahrzeug automatisch betrieben wird, hängt der Komfort für den Fahrer nur noch von der Qualität des Leitfahrzeugs ab und der Fahrer ist von allen Schwingungsanregungen des Anhängers abgekoppelt. Außerdem kann die Verdichtung des Bodens durch eine Prozesskette mit erfindungsgemäßen Transportfahrzeugen im Vergleich zu allen anderen Transportsystemen reduziert werden, da die Masse der eingesparten Fahrzeuge den Boden nicht mehr verdichtet, beim Transportfahrzeug die mechanische Deichsel und schwere Ladevorrichtungen für Container eingespart werden können und das Fahrzeug in Leichtbau herstellbar ist. Reifenbefüllungsanlagen gestatten auf dem Feld eine automatische Absenkung des Reifendrucks, um die Aufstandsfläche der Reifen zu vergrößern und den Bodendruck zu verringern. Eine Massereduzierung der Erntemaschinen kann weiter durch stetiges Abtanken auf das parallel fahrende Transportfahrzeug erreicht werden, wobei das Maschinenkonzept der "virtuellen Deichsel" alle Möglichkeiten des spurversetzten Fahrens des Transportfahrzeugs und weitere Spurvariationen durch Einzelradlenkung und Hexapod-Achsaufhängung gestatten.

Durch die "virtuelle Deichsel" kann der Kontrollhorizont eines Transportfahrzeugs bzw. seines Fahrzeug-Managements so erweitert werden, dass sich das Fahrzeug auf dem Feld frei und autonom bewegen kann, wenn es von einem Leitfahrzeug dazu aufgefordert wird. Ist ein Leitfahrzeug nicht in der Nähe oder "inaktiv", so kann ein Transportfahrzeug auch von einer Leitzentrale mit Hilfe von elektronischen Karten und GPS-Ortungssystemen an den nächsten Einsatzort geführt und auf dem Feld eingesetzt werden. Auf den topologischen Karten sind Hindernisse markiert und Leitlinien eingetragen, welchen das Transportfahrzeug folgen kann bzw. umfahren muss.

Bemannte Leitfahrzeuge erweitern den Kontrollraum des Transportfahrzeugs so, dass das Transportfahrzeug in Zukunft auch auf der Straße eingesetzt werden kann, was die Versuche mit Fahrerassistenz-Systemen nachgewiesen haben.

Beispiele für Empfangseinheiten, die drahtlos Positionskoordinaten übernehmen können, sind Satellitenpositionsbestimmungssysteme (auch differentielle), Funk- und/oder Radarsignale empfangende Einheiten. Der kombinierte Einsatz mehrerer verschiedener Empfangseinheiten erweitert die Möglichkeiten eines autark fahrbaren Transportfahrzeugs und erhöht zusätzlich die Steuerungsgenauigkeit. Satellitennavigationsgeräte für alle Fahrzeuge einer Prozess-Kette und CBS-Kommunikation aller Teilnehmer untereinander reduzieren die Gefahr von Kollisionen und steigern die Sicherheit.

Bei einem autonom fahrenden Transportfahrzeug kann die Position und Lage der Erntemaschine oder allgemein des vorausfahrenden Leitfahrzeugs mit Radar- oder Laser-Verfahren und/oder elektronischer Bildverarbeitung abgetastet werden, um aus der relativen Position von Leitfahrzeug und Transportfahrzeug den nächsten Soll-Bewegungsvektor des Transportfahrzeugs zu generieren.

Leitfahrzeuge wie Traktor oder Erntemaschine sollten vom Transportfahrzeug an individuellen Merkmalen erkannt werden. Für jedes Leitfahrzeug können somit spezielle Leitalgorithmen in der elektrischen Steuerung abgelegt und wieder abgerufen werden, nach denen sich das Transportfahrzeug dem jeweiligen Leitfahrzeug annähert.

Vorteilhaft kann es außerdem sein, Sensoren an solchen erfindungsgemäßen Transportfahrzeugen einzusetzen. Diese können an Achsen und/oder den Rädern angeordnet sein, um die Drehzahlen, Drehmomente, die jeweilige Masse und/oder die Radstellungen zu bestimmen.

Das Transportfahrzeug besteht aus einem Chassis und mindestens einem Triebachs-Aggregat. Das Chassis sollte den Aufsatz von unterschiedlichen Kipper-, Pritschen-, und Güllefass-Aufbauten, etc. gestatten, so dass das Transportfahrzeug vielfältig einsetzbar ist. Als Federung können adaptive und aktive Systeme eingesetzt werden. Jedes Achs-Aggregat kann aus einer Achsbrücke und zwei Radköpfen mit Servoantrieb, Servobremse und Servolenkung bestehen. Es können auch zwei und mehr Triebachsen zum Einsatz kommen. Eine Änderung der Bewegungsrichtung des Gesamtfahrzeugs lässt sich aber nur über eine Änderung der Bewegungsvektoren der einzelnen Räder erreichen. Gegenüber konventionellen Steuerungsverfahren erfordert dies mehr Intelligenz und eine Erweiterung des abzuarbeitenden Codes und der erforderlichen Speicherkapazität. Nach der Diskussion des äußeren Kontrollraums der elektrischen Steuerung eines Triebachs-Anhängers geht es darum, auch die internen Kontrollräume der Bewegungsvektoren aller Räder und das Gierverhalten des Gesamtfahrzeugs abzuklären. Einzelradantriebe an den Transportfahrzeugen reduzieren durch ihre mehrfache Redundanz die Ausfallwahrscheinlichkeit des Gesamtsystems und steigern die Sicherheit in der Prozesskette. Als Primär-Leistungseinheit können ein zentraler Unterflur-Diesel-Motor und Generator oder alternativ eine Brennstoffzelle eingesetzt werden. Der Antrieb des Transportfahrzeugs sollte elektrisch unmittelbar an den Achsen oder bevorzugt an den angetriebenen Rädern, gegebenenfalls unter Zwischenschaltung eines mechanischen Getriebes erfolgen. Elektrische Komponenten haben den Vorteil, dass sie auch bei tiefen Temperaturen einsetzbar sind und nicht einfrieren. Als vielversprechend kann ein System mit mehreren Brennstoffzellen angesehen werden, da sie ohne Umweg über eine mechanische Stufe den chemischen Energieinhalt des Kraftstoffs direkt in Gleichstrom umsetzen und den Brennstoff "kalt verbrennen". Kommen mehrere Brennstoffzellen zum Einsatz, so lassen sich bei Traktoren verbesserte Wirkungsgrade für den Fall erreichen, dass die installierte Leistung nicht voll ausgenutzt wird und einzelne Zellen abgeschaltet werden können. Brennstoffzellen haben im Gegensatz zum Dieselmotor ihre besten Wirkungsgrade von etwa 40 Prozent nahe ihrer maximalen Auslastung.

Da ein Transportfahrzeug in der Ernte-Prozesskette in der Regel mit einer Vielzahl von Fahrzeugen zusammenwirken soll, erleichtert das Prinzip der "virtuellen Deichsel" die Transporteinsätze wesentlich, da nicht mehr manuell angekoppelt werden muss. Bei entsprechender Ausbildung des erfindungsgemäßen Transportfahrzeugs können nach dem Andocken Container von Transportfahrzeug zu Transportfahrzeug oder auch zu einem nicht angetriebenen Anhänger oder einem Nutzkraftfahrzeug verschoben werden. Es wird davon ausgegangen, dass die Produktivität einer Prozesskette von Transportfahrzeugen mit "virtueller Deichsel" im Vergleich zu den traditionellen Transportsystemen wegen der gewonnenen Flexibilität und ihrem hohen Automatisierungsgrad, dem Fortfall manueller Kopplungsmanöver und dem leichten Wechsel von Containern steigt.

Nachfolgend soll die Erfindung beispielhaft beschrieben werden. Es zeigt:
Fig. 1: einen Traktor mit nicht angetriebenem Tandemachs-Anhänger(Stand der Technik),
Fig. 2: einen Traktor mit Tandemachsen-Triebachs-Anhänger (Stand der Technik),
Fig. 3: eine Draufsicht auf ein beidrehendes Leitfahrzeug, welches über Funk ein Transportfahrzeug auffordert, sich anzukoppeln, wobei das Transportfahrzeug über Radar die Position und Lage des Leitfahrzeuges ortet,
Fig. 4: Bei gleichzeitiger Bewegung beider Fahrzeuge verkürzt das Transportfahrzeug in einer Phase 1 den Abstand zum Leitfahrzeug,
Fig. 5: In der Phase 2 nähert sich das Transportfahrzeug dem Leitfahrzeug bis auf einen Arbeitsabstand A1. In gleicher Weise koppelt sich ein zweites Transportfahrzeug an,
Fig. 6: Erweiterung des Kontrollraums des Transportfahrzeugs auf der Strasse um die Kontrolldistanz des bemannten Leitfahrzeugs bzw. der Vorausschau des Fahrers.
Fig. 7: Nach Aufforderung zum Abtanken nimmt das Transportfahrzeug die Ortung eines Mähdreschers als Leitfahrzeug auf und nähert sich ihm mit eingeschlagenen Rädern,
Fig. 8: Annäherung an ein Leitfahrzeug in der ersten Phase 1,
Fig. 9: Seitliches Andocken an ein Leitfahrzeug in einem Abstand B1 in der zweiten Phase 2 und Vorbereitung des Überladevorgangs,
Fig. 10: Andocken eines Transportfahrzeugs an ein Nutzkraftfahrzeug und Übergabe eines Containers für den Abtransport, und
Fig. 11: Abfahrt des Containers mit einem konventionellen Nutzkraftfahrzeug als Leitfahrzeug.

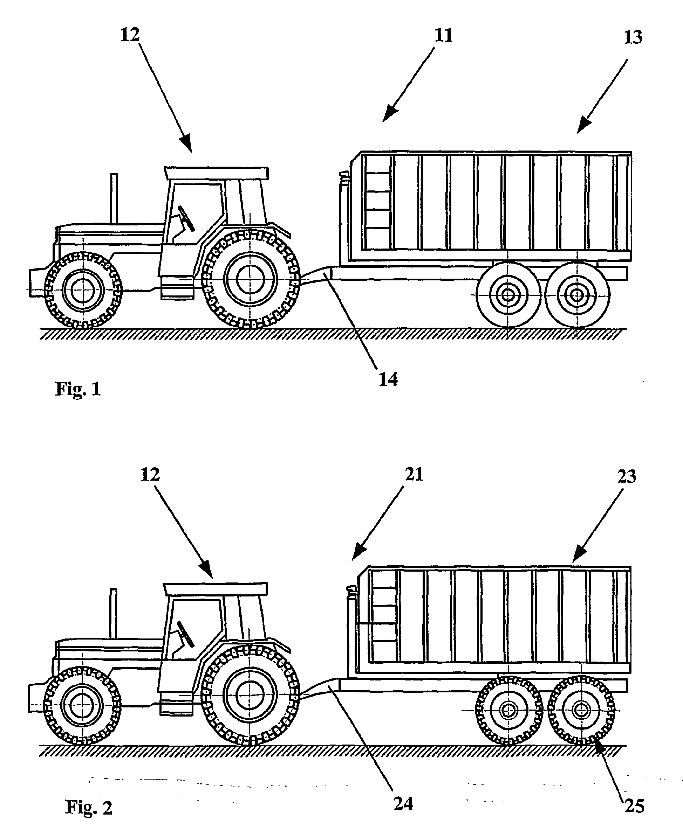

Die Figur 1 zeigt ein Transportfahrzeug 11 mit einem landwirtschaftlichen Traktor 12 und einem Tandemachs-Anhänger 13 nach dem Stand der Technik, die über eine Deichsel 14 miteinander verbunden sind. Die Nachteile bestehen darin, dass der Traktor mit einem Eigengewicht von 7 Tonnen und einer Aufstützlast der Deichsel 14 von 3 Tonnen bei widrigen Witterungsverhältnissen nicht in der Lage ist, den fast doppelt so schweren Anhänger zu ziehen.

In der Figur 2 ist dieses Traktionsproblem dadurch gelöst, dass der Tandemachs-Anhänger 13 durch einen Triebachs-Anhänger 23 mit zwei Triebachsen 25 ersetzt wurde, so dass sich das nutzbare Adhäsionsgewicht des Zuges 21 um die Masse des Triebachs-Anhängers 23 und der Zuladung um etwa 20 Tonnen erhöht hat.

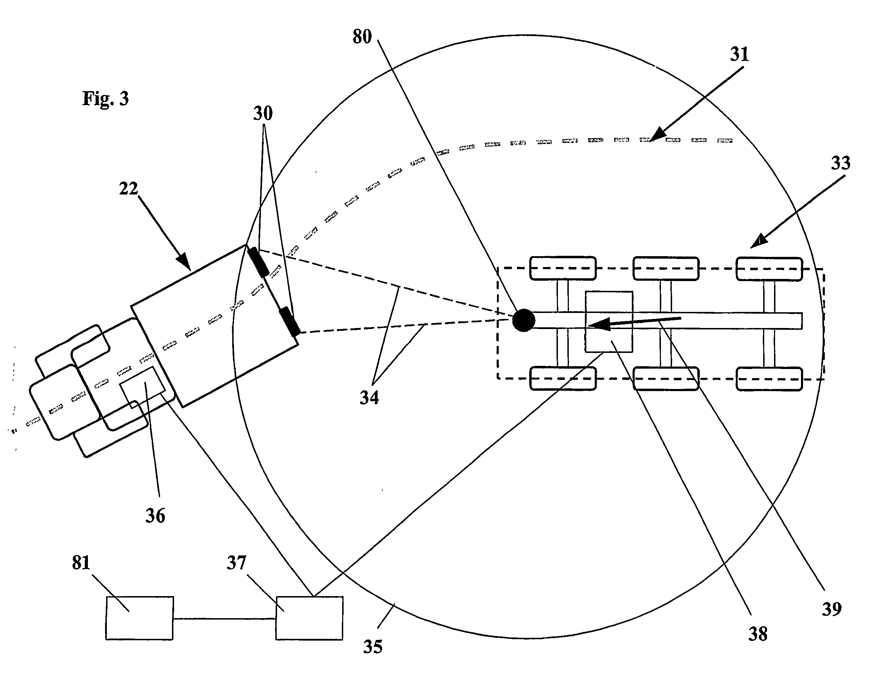

Das in Figur 3 gezeigte Transportfahrzeug 33 in Form eines Triebachs-Anhängers mit drei Achsen ist über eine "virtuelle Deichsel" 34 mit dem Leitfahrzeug 22 verbunden. Das bemannte Leitfahrzeug 22 überholt das Transportfahrzeug 33 auf der Spur 31 und setzt sich innerhalb des Kontrollraums 35 vor das Transportfahrzeug 33.

Der Fahrer des Leitfahrzeugs 22 fordert über eine Funkverbindung 36 - Leitstelle 37 - Strecke 38 zur elektronischen Steuerung das Transportfahrzeug 33 auf, sich anzukoppeln. Der Kontroller 38 tastet mit Rundum-Radar 80 die Position des Leitfahrzeugs 22 ab und generiert mit den unter der Identifikation des Leitfahrzeugs 22 abgelegten Daten eine Folge von Bewegungsvektoren 39 zur Annäherung.

Die Aufforderung zum Ankoppeln des Transportfahrzeugs 33 kann auch von einer externen Leitzentrale 81 ausgesprochen werden.

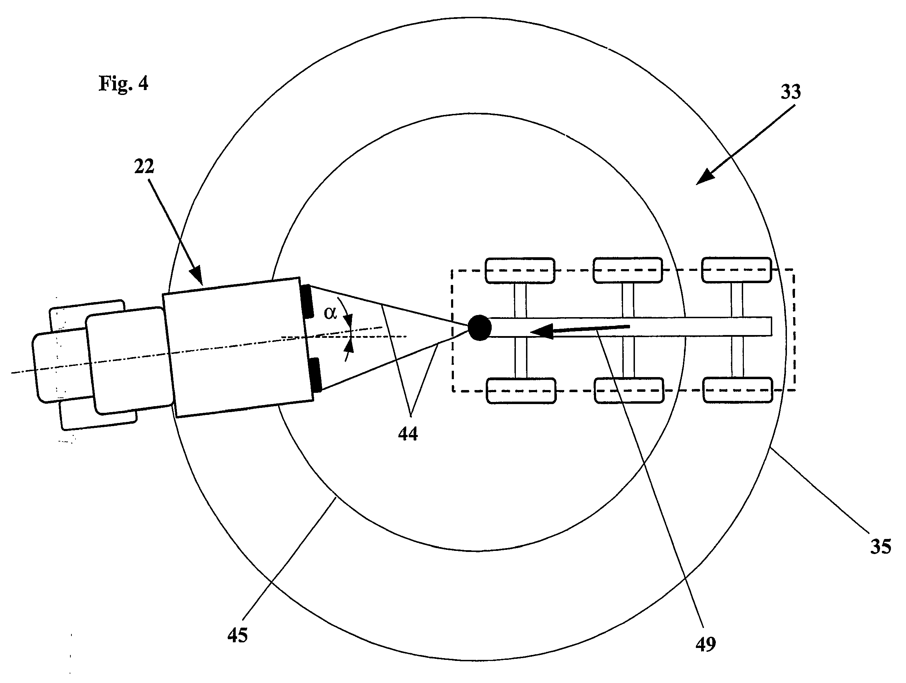

In der Figur 4 hat sich der Abstand der Fahrzeuge 22 und 33 gegenüber ihrer Position in Figur 3 reduziert, was auch an den Durchmessern der Kontrollräume 35 und 45 abgelesen werden kann. Bis auf eine Winkeldifferenz Alpha folgt das Transportfahrzeug 33 dem Leitfahrzeug 22 bereits in der Spur. Die Bewegungsvektoren 39 und 49 haben sich nur wenig geändert.

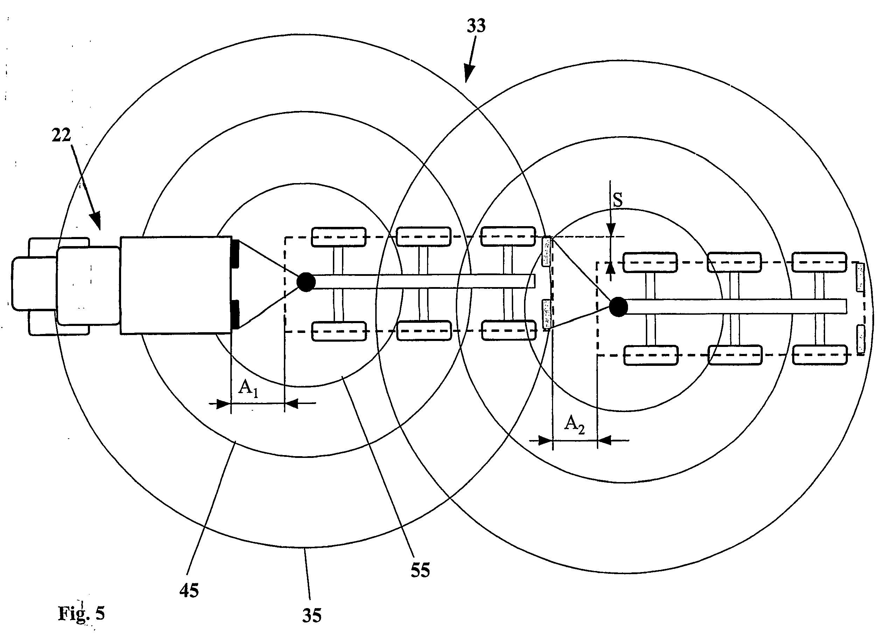

In der Figur 5 wurde der Arbeitsabstand A1 erreicht und das Transportfahrzeug 33 ist voll einsatzbereit. Es ist weiter gezeigt, dass sich ein zweiter Triebachs-Anhänger nach der gleichen Methode bis auf den Arbeitsabstand A2 an das erste Transportfahrzeug 33 angenähert hat. Die Aufforderung, sich spurversetzt anzukoppeln, wurde eingehalten, was durch den Spurversatz S dokumentiert ist.

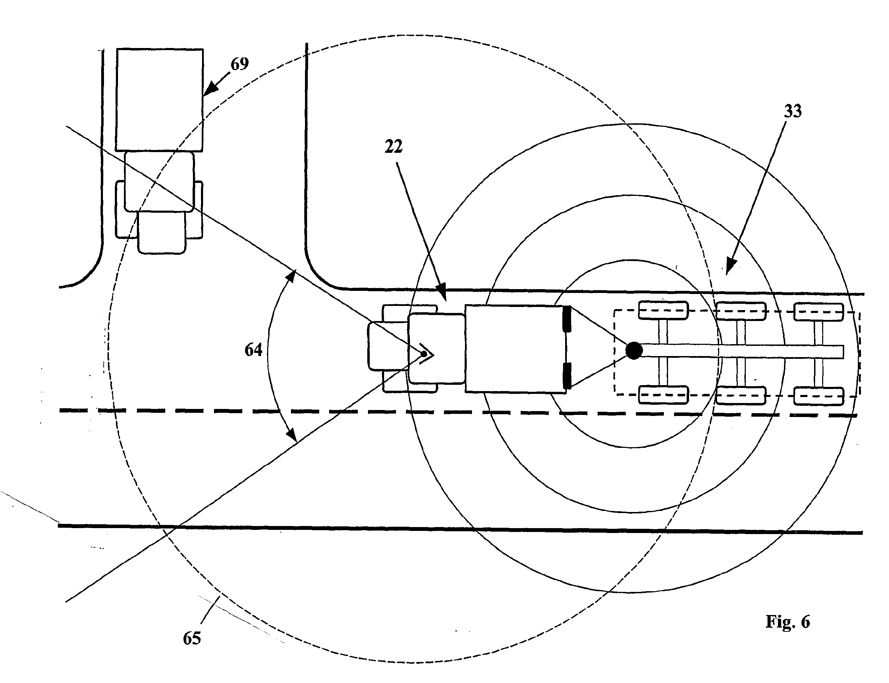

In der Figur 6 ist die Erweiterung des Kontrollraums des Transportfahrzeugs 33 um den Kontrollhorizont des Leitfahrzeugs 22 bzw. die Vorausschau des Fahrers dargestellt. Das bemannte Leitfahrzeug 22 erweitert den Einsatzbereich des Transportfahrzeugs 33 für den Straßentransport. Ausgehend vom Augenpunkt des Fahrers sind zwei Sehstrahlen dargestellt, die einen Sehwinkel 64 einschließen. Innerhalb dieses Sehwinkels erkennt der Fahrer das Fahrzeug 69, welches sich von rechts einer Kreuzung nähert. Das Transportfahrzeug 33 folgt dem bemannten Leitfahrzeug 22 wie mit einer mechanischen Deichsel gekoppelt.

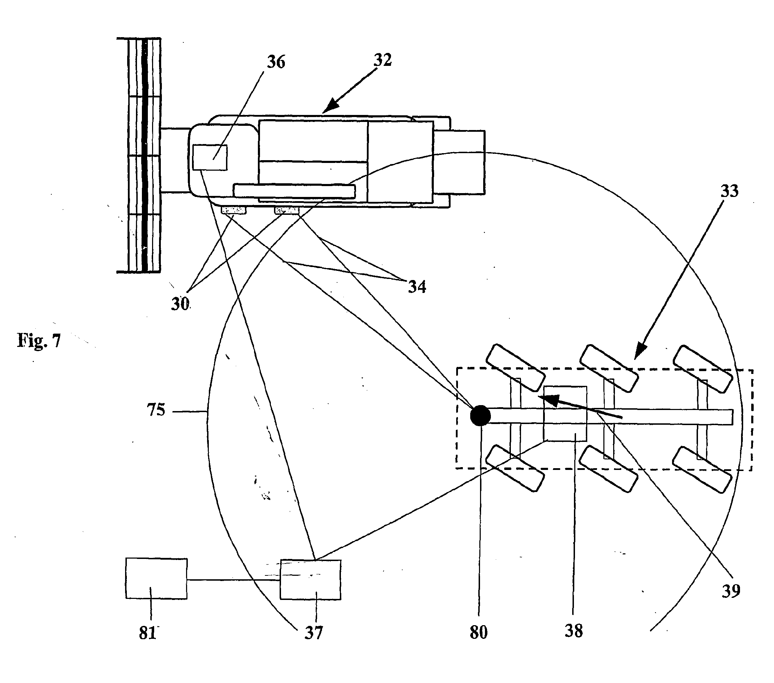

Da in der Ernte-Kette auch Erntemaschinen 32, wie der dargestellte Mähdrescher, als Leitfahrzeuge für Transportfahrzeuge 33 anzusehen sind, sind neben der Längsfahrt des Transportfahrzeugs 33 auch Querbewegungen erforderlich, um sich seitlich an einen Mähdrescher anzudocken, wie in Figur 7 dargestellt. Alle Prozeduren laufen grundsätzlich analog zu Figur 3 ab.

Der Fahrer der Erntemaschine 32 fordert über die Funkverbindung 36 - Leitstelle 37 - Strecke zur elektrischen Steuerung 38 des Transportfahrzeugs 33 dieses auf, sich anzukoppeln. Ein Rundum-Radar 80 tastet als Beispiel einer Empfangseinheit drahtlos die Position der Erntemaschine 32 ab und berechnet mit den unter der Identifikation der Erntemaschine 32 abgelegten Daten eine Folge von Bewegungsvektoren zur Annäherung an die als Leitfahrzeug wirkende Erntemaschine 32.

Die "virtuelle Deichsel" 34 erstreckt sich bei der Erntemaschine 32 seitlich zwischen der Markierung 30 der Erntemaschine 32 und dem Rundum-Radar 80. Der berechnete Bewegungsvektor 39 weist in Richtung der Markierung 30 der Erntemaschine 32. In Figur 7 wird die Querfahrt über die Lenkung der Einzelradantriebe des Transportfahrzeugs 33 eingeleitet.

Die Aufforderung zum Ankoppeln des Transportfahrzeugs 33 kann auch von einer externen Leitzentrale 81 ausgesprochen werden.

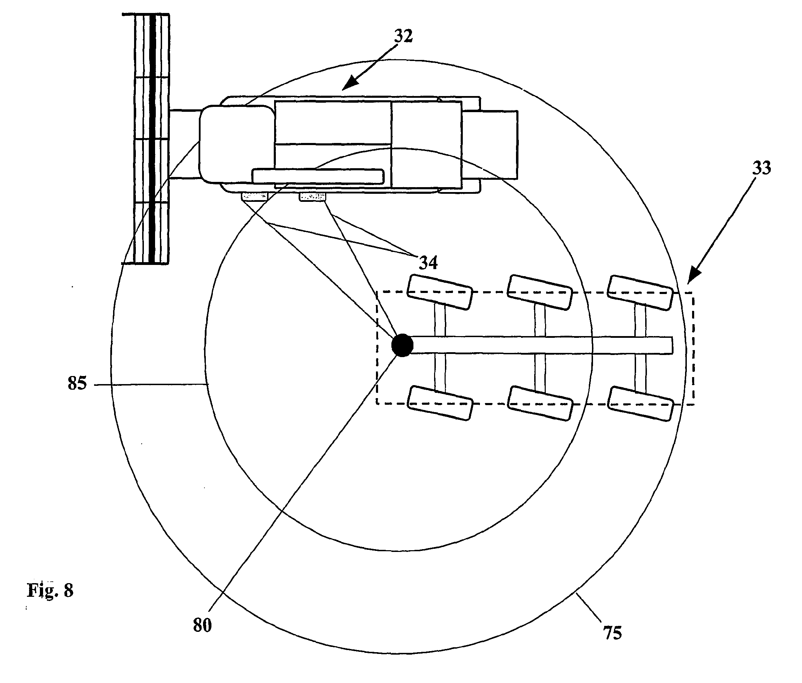

In Figur 8 hat sich das Transportfahrzeug 33 bis auf den Kontrollraum 85 an die Erntemaschine 32 angenähert und das Rundum-Radar 80 erfasst die Position der Erntemaschine 32 über die "virtuelle Deichsel" 34. Die unter der Identifikation der Erntemaschine 32 abgelegten Daten gestatten die Generierung einer Folge von Bewegungsvektoren zur Annäherung.

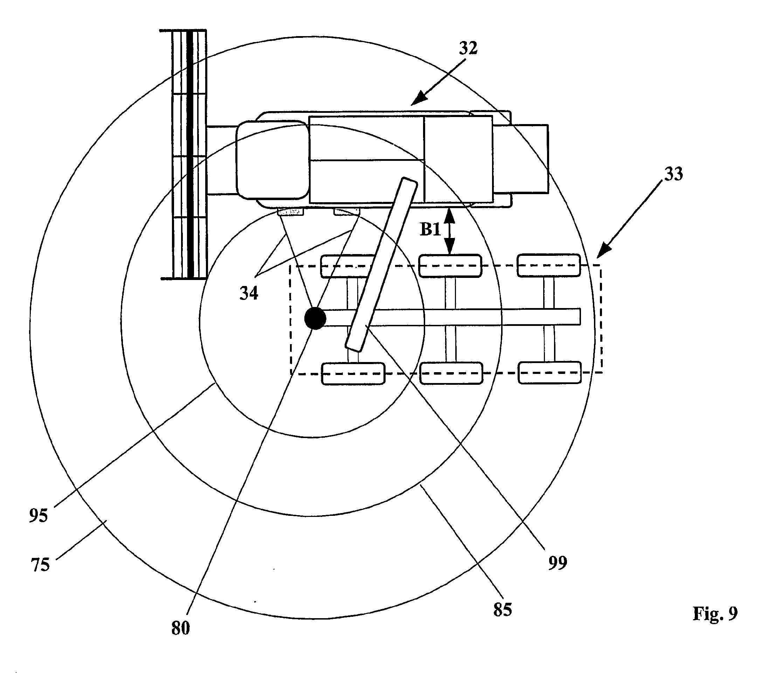

Figur 9 zeigt, dass sich das Transportfahrzeug 33 nach Lage des "virtuellen Dreiecks" 34 im gewünschten Abstand B1 zur Erntemaschine 32 angedockt hat. Die Übergabeschnecke 99 wurde bereits in Position gebracht. Da beim Abtanken der Erntemaschine 32 beide Fahrzeuge in Bewegung sind, müssen die Positionen der Fahrzeuge zueinander laufend überwacht und korrigiert werden. Um eine gleichmäßige Beladung des Transportfahrzeugs 33 zu garantieren, sollte zusätzlich die relative Lage des Übergaberohres 99 nachgeregelt werden.

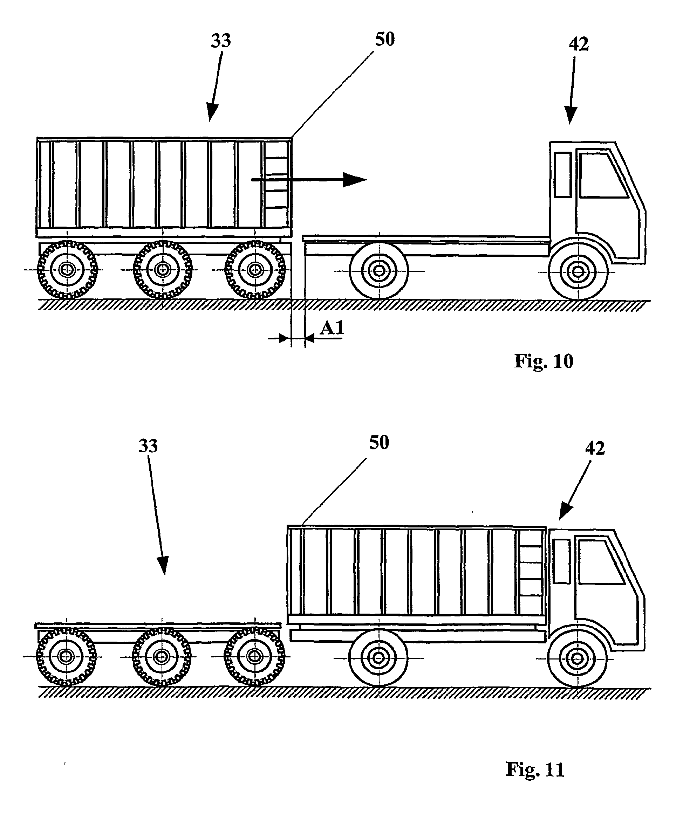

In der Figur 10 ist eine Situation dargestellt, in der ein Transportfahrzeug 33 von einem Nutzkraftfahrzeug 42 als Leitfahrzeug die Aufforderung zur Übergabe des vollen Containers 50 für den Abtransport erhielt. Aufgrund seiner eigenen Positionen und der des rufenden Nutzkraftfahrzeugs 42 ist das Transportfahrzeug 33 in der Lage, das Nutzkraftfahrzeug 42 anzufahren und sich zur Übergabe des Containers 50 im Abstand A1 anzudocken. Dieses geschieht analog zu Figur 5 mit dem Unterschied, dass der Abstand A1 nur etwa 5 cm beträgt.

Nach Übergabe des Containers 50 ist das Nutzkraftfahrzeug 42 bereit zur Abfahrt und hinterlässt ein Transportfahrzeug 33 ohne Container. Das Transportfahrzeug 33 steht für die Übernahme eines leeren Containers wieder bereit.

Bei dem Verfahren des autonomen landwirtschaftlichen Transports mit Transportfahrzeugen 33 und Leitfahrzeugen 22, 32, 42 müssen die Positionen der beteiligten Fahrzeuge im Bereich von Millisekunden erfasst und neu berechnet werden. Aus diesen Sequenzen wurden als Figur 3 bis 5 bzw. Figur 7 bis 9 drei Konstellationen für das rückseitige und das seitliche Ankoppeln an ein Leitfahrzeug festgehalten.

Die Verfahrenstechnik von dreiachsigen Transportfahrzeugen 33 wurde in Figur 1 bis 11 im Zusammenspiel mit unterschiedlichen Leitfahrzeugen 22, 32, 42 dargestellt. Schnell laufende Leitfahrzeuge 22, 32, 42 und Transportfahrzeuge 33 sind darüber hinaus z.B. auch beim Bau von Autobahnen und bei einer Vielzahl von Anwendungen im Offroad-Bereich einsetzbar.

Neben dem favorisierten dreiachsigen Transportfahrzeug 33 ist aber auch jede andere Zahl von angetriebenen Achsen für Transportfahrzeuge denkbar.

Als "virtuelle Deichsel" können neben dem Rundum-Radar 80 auch Verfahren der Laser-Technik und des Ultraschalls oder der elektronischen Bildverarbeitung eingesetzt werden.

Ein hervorstechendes Merkmal der neuen Antriebstechnologie stellt das Zusammenspiel des Kontrolldreiecks der "Virtuellen Deichsel" 34 zwischen dem Rundum-Radar 80 des Transportfahrzeugs 33 und der Markierung 30 des Leitfahrzeugs 22, 32, 42 dar.

Aus den Messdaten berechnet die elektronische Steuerung 38 des autonomen Transportfahrzeugs 33 den momentanen Bewegungsvektor 39 des Fahrzeugs und leitet daraus die neuen Sollvorgaben der Bewegungsvektoren der individuellen Einzelradantriebe ab.

Diese Vorgaben werden über CAN-Bus oder einem anderen Kommunikationssystem den Kontrollern der Einzelradantriebe übermittelt. Die Umsetzung der errechneten Vorgaben für Drehzahl, Drehmoment und Lenkeinschläge der Radantriebe wird von der elektronischen Steuerung der Einzelradantriebe gesteuert und überwacht.

Während das Transportfahrzeug 33 hinsichtlich seiner elektronischen Funktionen hochgerüstet werden sollte, um sich allen Arbeitsanforderungen im Laufe eines Jahres flexibel anpassen zu können, kann sich die elektronische Aufrüstung konventioneller Leitfahrzeuge 22, 32, 42 auf die Hinzufügung z.B. einer Satellitenempfangsstation und/oder einer CBS-Funkanlage beschränken.

Ein intelligentes autonom fahrendes Transportfahrzeug 33 kann Elemente für folgende Funktionen an Bord haben:
- Satellitenempfangsstation
- CBS-Funkanlage mit Identifikation des rufenden Leitfahrzeugs
- "virtuelle elektronische Deichsel" 34 mit Rundum-Radar 80 zur Erfassung der Position eines rufenden Leitfahrzeugs 22, 32, 42
- elektronische Steuerung 38 mit Mikroprozessor hinreichender Leistung und Speicherkapazität
- Abruf der Leitalgorithmen des identifizierten Leitfahrzeugs 32 und Berechnung der Bewegungsvektoren 39 des Gesamtfahrzeugs und der Einzelradantriebe des Transportfahrzeugs 33
- Kommandierung der Vorgabedaten für die Einzelradantriebe über das Kommunikationsnetz
- Abarbeitung eines Fahrzyklus aller Einzelradantriebe und Wiederholung der Abarbeitungsschleife bis der Arbeitsabstand A1 erreicht ist
- Ankoppeln an das Leitfahrzeug 22, 32, 42 mit der "virtuellen elektronischen Deichsel" und Abtransport des gesamten Gespannes
- Andocken eines Transportfahrzeugs 33 im Abstand von etwa 5 cm an ein Nutzkraftfahrzeug 32 zur Übergabe eines Containers 100 für den Abtransport
- etc.

Als Primär-Leistungseinheit für ein Transportfahrzeug 33 kommt z.B. ein zentraler Unterflur-Diesel-Motor mit Generator in Betracht, dessen Wechselstrom von einem Gleichrichter gleichgerichtet und als Gleichstrom über einen Zwischenkreis den Einzelradmotoren zugeführt wird, wo je Rad ein Kontroller und Wechselrichter die von der elektronischen Steuerung vorgegebenen Radgeschwindigkeiten und Momente einstellt.

Es kann aber auch eine Primär-Leistungseinheit mit verteilten Brennstoffzellen von etwa 40 kW, die als Einzelaggregate rechts und links zwischen den Rädern platziert werden und den Vorteil bieten, dass der chemische Energieinhalt des Kraftstoffs ohne den Umweg über eine mechanische Stufe direkt als Gleichstrom bereitgestellt wird.

## Patentansprüche

1. Kombination aus einer selbstfahrenden Erntemaschine (32) und einem zur Aufnahme von Erntegut von der Erntemaschine eingerichteten Transportfahrzeug (33), das mindestens eine angetriebene und mindestens eine gelenkte Achse aufweist, wobei das Transportfahrzeug (33) eine elektronische Steuerungseinheit (38) aufweist, die zur Steuerung der angetriebenen und der gelenkten Achse des Transportfahrzeugs (33) eingerichtet ist, und die Steuerungseinheit (38) mit einer Empfangseinheit verbunden ist, die eingerichtet ist, Positionsdaten der Erntemaschine (32) zu empfangen, so dass die Steuerungseinheit (38) betreibbar ist, das Transportfahrzeug (33) zur Übernahme von Erntegut von der Erntemaschine (32) selbsttätig in Bezug zu einer Position der Erntemaschine (32) zu steuern, **dadurch gekennzeichnet, dass** die Steuerungseinheit (38) betreibbar ist, das Transportfahrzeug (32) selbsttätig parallel zur Erntemaschine (32) fahren zu lassen und daran anzudocken, um während der Fahrt Erntegut von der Erntemaschine (32) übernehmen zu können, und dass das Transportfahrzeug (33) unbemannt ist.

2. Kombination nach Anspruch 1, **dadurch gekennzeichnet, dass** die Empfangseinheit für den Empfang von Informationen über Positionskoordinaten enthaltenden Signalen eines Satellitenpositionsbestimmungssystems und/oder den Empfang von Funk- und/oder Radarsignalen ausgebildet ist.

3. Kombination nach Anspruch 1 oder 2, **dadurch gekennzeichnet, dass** die Erntemaschine (32) mit einem Satellitenpositionsbestimmungssystem ausgestattet ist, dessen Positionssignale insbesondere über Funk auf die Empfangseinheit des Transportfahrzeugs (33) übertragen werden.

4. Kombination nach mindestens einem der vorhergehenden Ansprüche, **dadurch gekennzeichnet, dass** ein Laserstrahlführungssystem und/oder eine elektronische Kamera mit einer Bildverarbeitung für das Transportfahrzeug (33) vorhanden ist.

5. Kombination nach mindestens einem der vorhergehenden Ansprüche, **dadurch gekennzeichnet, dass** die Steuerungseinheit (38) betreibbar ist, mit unter einer Identifikation einer Erntemaschine (32) abgelegten Daten eine Folge von Bewegungsvektoren zur Annäherung an die Erntemaschine (32) zu berechnen.

6. Kombination nach mindestens einem der vorhergehenden Ansprüche, **dadurch gekennzeichnet, dass** die Erntemaschine (32) mit einem Übergaberohr (99) zur Übergabe geernteten Ernteguts auf das Transportfahrzeug (33) ausgestattet ist, und dass die relative Lage des Übergaberohrs (99) zur gleichmäßigen Beladung des Transportfahrzeugs (33) selbsttätig nachregelbar ist.

7. Kombination nach mindestens einem der vorhergehenden Ansprüche, **dadurch gekennzeichnet, dass** an Achsen und/oder Rädern des Transportfahrzeugs (33) zur Bestimmung von Drehzahlen, Drehmomenten, der jeweiligen Masse und/oder von Radstellungen Sensoren vorhanden sind.

8. Kombination nach mindestens einem der vorhergehenden Ansprüche, **dadurch gekennzeichnet, dass** die Räder des Transportfahrzeugs (33) jeweils einzeln angetrieben und/oder lenkbar sind.

9. Kombination nach mindestens einem der vorhergehenden Ansprüche, **dadurch gekennzeichnet, dass** auf das Fahrzeugchassis des Transportfahrzeugs (33) Wechselcontainer (100) aufsetzbar sind.

10. Kombination nach mindestens einem der vorhergehenden Ansprüche, **dadurch gekennzeichnet, dass** das Transportfahrzeug (33) ohne Bedienerarbeitsplatz ist

## Claims

1. Combination comprising a self-propelled harvester (32) and a transportation vehicle (33) which is designed to receive harvested crops from the harvester and has at least one driven axle and at least one steered axle, with the transportation vehicle (33) having an electronic control unit (38) which is designed to control the driven axle and the steered axle of the transportation vehicle (33), and the control unit (38) being connected to a receiving unit which is designed to receive position data of the harvester (32), so that the control unit (38) can be operated so as to automatically control the transportation vehicle (33) in relation to a position of the harvester (32) for the purpose of transferring harvested crops from the harvester (32), **characterized in that** the control unit (38) can be operated so as to allow the transportation vehicle (32) to be automatically driven parallel to the harvester (32) and dock with it in order to be able to transfer harvested crops from the harvester (32) during driving, and **in that** the transportation vehicle (33) is unmanned.

2. Combination according to Claim 1, **characterized in that** the receiving unit is designed to receive signals, which contain information about position coordinates, from a satellite positioning system and/or to receive radio and/or radar signals.

3. Combination according to Claim 1 or 2, **characterized in that** the harvester (32) is equipped with a satellite positioning system whose position signals are transmitted, in particular by radio, to the receiving unit of the transportation vehicle (33).

4. Combination according to at least one of the preceding claims, **characterized in that** a laser-beam guiding system and/or an electronic camera with image processing for the transportation vehicle (33) is provided.

5. Combination according to at least one of the preceding claims, **characterized in that** the control unit (38) can be operated so as to calculate a sequence of movement vectors for approaching the harvester (32) using data stored upon identification of a harvester (32).

6. Combination according to at least one of the preceding claims, **characterized in that** the harvester (32) is equipped with a transfer pipe (99) for transferring harvested crops to the transportation vehicle (33), and **in that** the relative position of the transfer pipe (99) can be automatically adjusted for uniform loading of the transportation vehicle (33).

7. Combination according to at least one of the preceding claims, **characterized in that** sensors are provided on axles and/or wheels of the transportation vehicle (33) in order to determine rotation speeds, torques, the respective mass and/or wheel positions.

8. Combination according to at least one of the preceding claims, **characterized in that** the wheels of the transportation vehicle (33) are each driven and/or steerable.

9. Combination according to at least one of the preceding claims, **characterized in that** replacement containers (100) can be fitted on the chassis of the transportation vehicle (33).

10. Combination according to at least one of the preceding claims, **characterized in that** the transportation vehicle (33) does not have an operator cabin.

## Revendications

1. Combinaison formée par une machine de récolte (32) automotrice et un véhicule de transport (33), qui est conçu pour recevoir à partir de la machine de récolte des végétaux récoltés et qui comporte au moins un essieu entraîné et au moins un essieu guidé, le véhicule de transport (33) comportant une unité de commande (38) électronique, qui est conçue pour commander l'essieu entraîné et l'essieu guidé du véhicule de transport (33), et l'unité de commande (38) est reliée à une unité réceptrice, qui est conçue pour recevoir des données de positon de la machine de récolte (32), de telle sorte que l'unité de commande (38) peut être utilisée pour commander le véhicule de transport (33) pour un transfert des végétaux récoltés depuis la machine de récolte (32) automatiquement par rapport à une position de la machine de récolte (32), **caractérisée en ce que** l'unité de commande (38) peut être utilisée pour faire rouler le véhicule de transport (33) automatiquement parallèlement à la machine de récolte (32) et pour l'accoster à celle-ci, afin de pouvoir réceptionner depuis la machine de récolte (32), en cours de déplacement, des végétaux récoltés, et **en ce que** le véhicule de transport (33) roule sans conducteur.

2. Combinaison selon la revendication 1, **caractérisée en ce que** l'unité réceptrice est conçue pour la réception de signaux contenant des informations sur les coordonnées de position, délivrés par un système de détermination de position par satellite et/ou pour la réception de signaux radio et/ou radar.

3. Combinaison selon la revendication 1 ou 2, **caractérisée en ce que** la machine de récolte (32) est équipée d'un système de détermination de position par satellite, dont les signaux de position sont transmis en particulier par radio vers l'unité réceptrice du véhicule de transport (33).

4. Combinaison selon au moins une des revendications précédentes, **caractérisée en ce qu'**il est prévu un système de guidage de faisceau laser et/ou une caméra électronique avec un traitement d'image pour le véhicule de transport (33).

5. Combinaison selon au moins une des revendications précédentes, **caractérisée en ce que** l'unité de commande (38) peut être utilisée pour calculer avec des données, stockées sous une identification d'une machine de récolte (32), une suite de vecteurs de mouvement pour le rapprochement contre la machine de récolte (32).

6. Combinaison selon au moins une des revendications précédentes, **caractérisée en ce que** la machine de récolte (32) est équipée d'un tube de déversement (99) pour déverser les végétaux récoltés sur le véhicule de transport (33), et **en ce que** la position relative du tube de déversement (99) peut être corrigée automatiquement en vue d'un chargement uniforme du véhicule de transport (33).

7. Combinaison selon au moins une des revendications précédentes, **caractérisée en ce que** sur les essieux et/ou les roues du véhicule de transport (33) sont prévus des capteurs destinés à déterminer les vitesses de rotation, les couples de rotation, la masse respective et/ou les positions des roues.

8. Combinaison selon au moins une des revendications précédentes, **caractérisée en ce que** les roues du véhicule de transport (33) sont actionnées et/ou peuvent être guidées chacune séparément.

9. Combinaison selon au moins une des revendications précédentes, **caractérisée en ce qu'**un conteneur interchangeable (100) peut être monté sur le châssis du véhicule de transport (33).

10. Combinaison selon au moins une des revendications précédentes, **caractérisée en ce que** le véhicule de transport (33) ne comporte pas de poste de travail.
